(19) Europäisches Patentamt
European Patent Office
Office européen des brevets

(11) **EP 2 966 534 B1**

(12) **EUROPÄISCHE PATENTSCHRIFT**

(45) Veröffentlichungstag und Bekanntmachung des Hinweises auf die Patenterteilung:
**26.10.2016 Patentblatt 2016/43**

(51) Int Cl.:
*G01K 17/20* (2006.01)     *G05D 23/19* (2006.01)
*G01K 17/12* (2006.01)     *F24D 19/10* (2006.01)

(21) Anmeldenummer: **15169781.0**

(22) Anmeldetag: **29.05.2015**

(54) **VERFAHREN ZUR BESTIMMUNG DES HEIZWÄRMEBEDARFS VON WOHNGEBÄUDEN**

METHOD FOR THE DETERMINATION OF THE HEATING REQUIREMENT OF DWELLINGS

PROCÉDÉ DE DÉTERMINATION DU BESOIN THERMIQUE DE BÂTIMENTS RÉSIDENTIELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.06.2014 DE 102014008011**

(43) Veröffentlichungstag der Anmeldung:
**13.01.2016 Patentblatt 2016/02**

(73) Patentinhaber: **Vaillant GmbH**
**42859 Remscheid (DE)**

(72) Erfinder:
• **Littek, Jörg**
**44268 Herne (DE)**
• **Schulze-Hagen, Daniel**
**42349 Wuppertal (DE)**
• **Richter, Klaus**
**42855 Remscheid (DE)**

• **Franke, Benedikt**
**41470 Neuss (DE)**
• **Patay, Georg**
**2371 Hinterbrühl (AT)**
• **Faust, Christian**
**40699 Erkrath (DE)**

(74) Vertreter: **Popp, Carsten**
**Vaillant GmbH**
**IRP**
**Berghauser Straße 40**
**42859 Remscheid (DE)**

(56) Entgegenhaltungen:
**EP-A2- 1 215 445    EP-A2- 1 777 465**
**WO-A1-2005/085784    DE-A1- 2 416 749**
**DE-A1- 3 129 757     FR-A1- 2 739 931**
**NL-C1- 1 035 399**

**Beschreibung**

Ein Ausweis über die Gesamtenergieeffizienz von Gebäuden soll gemäß der Europäischen Richtlinie 2010/31/EU über die Gesamtenergieeffizienz von Gebäuden potenziellen Käufern und Mietern von Gebäuden oder Gebäudeteilen zutreffende Informationen über die Gesamtenergieeffizienz des Gebäudes sowie praktische Hinweise zu deren Verbesserung liefern. Beispielsweise für Deutschland regelt die Energieeinsparverordnung EnEV die Datenaufnahme und Datenverwendung. Energieausweise werden durch Energieberater, Installateure und weitere branchenspezifische Berufsgruppen ausgestellt. Es werden Verbrauchsenergieausweise und Bedarfsenergieausweise unterschieden.

Vermieter und Verkäufer bevorzugen den Verbrauchsenergieausweis, da dieser für den Fachmann in der Regel erheblich einfacher zu erstellen und somit günstiger ist. Dazu müssen über eine Zeitperiode anhand von drei Jahresabrechnungen des Energieversorgers Verbrauchsdaten zur Verfügung stehen. Dies hat jedoch den Nachteil, dass er durch das Nutzerverhalten beeinflusst wird. In der Praxis ist es häufig unmöglich, die Verbrauchsdaten für Heizung und der zentralen Warmwasser-Erwärmung getrennt zur Verfügung zu stellen. Zudem sind Energieeinsparungen durch z. B. Sanierungsmaßnahmen der Wärmedämmung am Wohngebäude erst in einem neu ausgestellten Energieausweis ersichtlich, wobei ein Verbrauchsausweis erst drei Jahre nach der Sanierungsmaßnahme ausgestellt werden kann, da erst nach diesem Zeitraum die notwendigen Verbrauchsdaten zur Verfügung gestellt werden können.

Bedarfsenergieausweise werden anhand des Aufbaus der Gebäudehülle berechnet. Bei älteren Gebäuden mit teilweise unklarem Wandaufbau werden die Wärmeverluste über die unbekannten Bauteile abgeschätzt, was zu einer Verfälschung des Energiebedarfsausweises führen kann. Die Erstellung ist aufwändig und teuer.

Nennenswert ist außerdem das Verfahren zur Ermittlung des Nennwärmebedarfs eines Heizungssystems der Patentschrift EP1215445 A2: Es wird vorgeschlagen, dass zeitabhängig die Außentemperatur gemessen wird und zeitabhängig eine für eine Energieabgabe der Wärmequelle an das Heizungssystem charakteristische Größe gemessen wird und aus den gemessenen Werten der Nennwärmebedarf berechnet wird, wobei mindestens so lange gemessen wird, bis das Verhältnis eines ermittelten maximalen Nennwärmebedarfs zu einem ermittelten minimalen Nennwärmebedarf größer als ein vorgegebener Wert ist, wobei dieser vorgegebene Wert größer als 1 ist.

Es ist daher Aufgabe der Erfindung, eine Alternative zur Ermittlung des Heizwärmebedarfs von Gebäuden bereitzustellen, die die vorgenannten Nachteile vermeidet.

Diese Aufgabe wird erfindungsgemäß durch ein Verfahren gemäß Anspruch 1 gelöst. Dazu wird kontinuierlich die Temperaturdifferenz zwischen dem Vorlauf und dem Rücklauf des Heizkreises gemessen. Dies kann beispielsweise durch zwei Temperatursensoren erfolgen, deren Messwerte voneinander subtrahiert werden. Die so gewonnene Temperaturdifferenz wird multipliziert mit dem Volumenstrom, der durch einen Volumenstromsensor erfasst wird. Dies kann ebenfalls mit einem Massenstromsensor erfolgen, da Volumenstrom und Massenstrom äquivalent sind. Aus dem Produkt aus Temperaturdifferenz und Volumenstrom kann die dem Gebäude zugeführte Heizleistung bestimmt werden. Darüber hinaus wird die Temperaturdifferenz zwischen der Raumtemperatur unter Außentemperatur bestimmt. Aus den nun gemessenen Werten werden die gemittelten Parameter eines Polynoms, das den formelmäßigen Zusammenhang zwischen Temperaturdifferenz und Wärmeleistung beschreibt, bestimmt. Da die Messwerte einerseits Messunsicherheiten aufweisen, andererseits aufgrund der thermischen Trägheit des Wohngebäudes Verzögerungen auftreten, werden die Parameter mithilfe grundsätzlich aus der Statistik und der digitalen Signalverarbeitung grundsätzlich bekannten Parameteridentifikationsverfahren, beispielsweise auf Basis der mittleren quadratischen Abweichung, über einen längeren Zeitraum gemittelt bestimmt. Auf der Basis des so parametrisierten Polynoms wird nun der für das Wohngebäude typische Heizwärmebedarf berechnet, in dem über einen bestimmten Zeitraum ein Raumtemperatur-Außentemperatur-Profil simuliert und auf integriert wird. Grundsätzlich ist es auch möglich, anstelle der Heizleistung einen Heizwärmebedarf über einen festen, kleinen Zeitraum anzugeben, was physikalisch äquivalent ist.

In einer Weiterbildung des Verfahrens wird als Zeitraum ein Jahr und der Heizwärmebedarf auf die Fläche des Wohngebäudes in Quadratmetern bezogen.

In einer besonders vorteilhaften Weiterbildung des Verfahrens enthält das Polynom zusätzlich ein die thermische Trägheit des Wohngebäudes repräsentierendes Glied, dessen Zeitkonstante ebenfalls mit einem grundsätzlich bekannten Parameteridentifikationsverfahren identifiziert wird.

Der Vorteil des Erfindungsgemäßenverfahrens ist, dass der Heizwärmebedarf mit den vorhandenen Heizgeräteinternen Sensoren erfasst werden kann über einen normierten Wetterdatensatz, der die Außentemperatur repräsentiert, und eine normierte Raumtemperatur, einen dynamischen Heizwärmebedarf für das Wohngebäude zu ermitteln, welcher nicht durch das Nutzerverhalten beeinflusst ist. Das Heizgerät ermittelt den im Energieausweis ausgewiesenen Heizwärmebedarf (kWh/m$^{2*}$a) selbstständig.

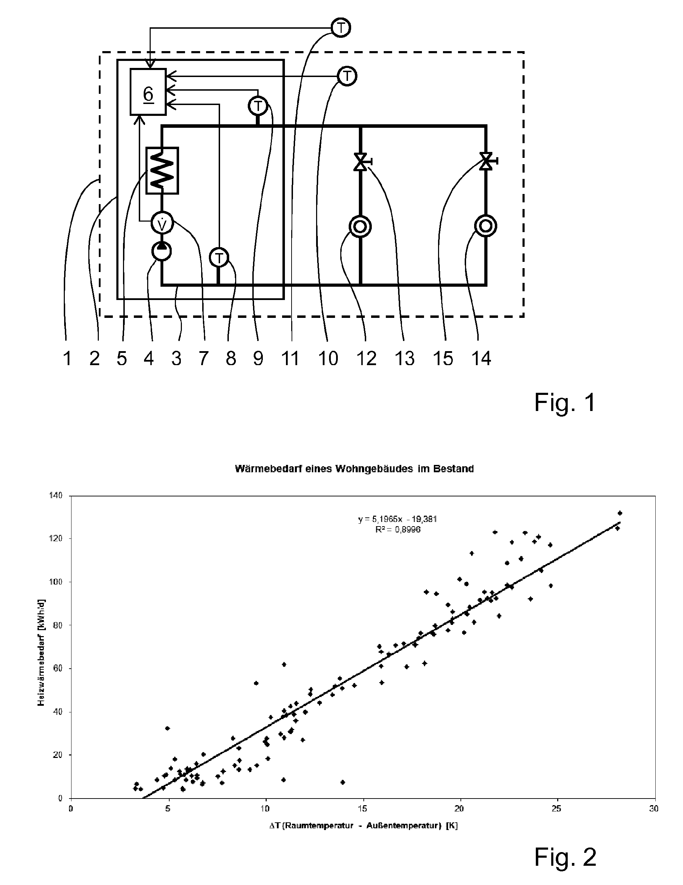

Die Erfindung wird nun anhand der Figuren erläutert. Figur 1 zeigt eine Vorrichtung zum Durchführen des erfindungsgemäßen Verfahrens. Die Figur 1 stellt schematisch ein Wohngebäude 1 dar, in dem mehrere Heizkörper 12, 14 vorgesehen sind, die jeweils über ein Ventil 13, 15 angesteuert werden. Ein Heizgerät 2 versorgt über einen Wärmetauscher 5, beispielsweise einen Brenner, das Wohngebäude mit Wärme. Dazu wird ein Wärmeträgermedium im Heizkreis 3 mit Hilfe der Umwälzpumpe 4 umgewälzt. Dadurch werden die Heizkörper 12, 14 mit Wärme versorgt. Temperatursensoren 9, 8 erfassen die Temperatur des Vorlaufs und des Rücklaufs des Heizkreises. Ein Volumenstromsensor 7 erfasst den Volumenstrom bzw. ein Massenstromsensor erfasst den Massenstrom. Daraus kann die abgegebene Leistung ermittelt werden. Dazu werden die Daten des Vorlauf-Temperatursensor 9, das Rücklauf-Temperatur Sensors 8 und des Volumenstromsensor das 7 einem Steuergerät 6 zugeführt. Ebenfalls stehen dem Steuergerät 6 die Daten eines Raum-Temperatursensors (10) und eines Außen-Temperatur Sensors 11 zur Verfügung.

Alle genannten Sensoren sind üblicherweise ohnehin in einem Heizgerät 2 nach dem Stand der Technik bzw. in einem mit einem Heizgerät 2 ausgestatteten Gebäude 1 vorhanden.

Das erfindungsgemäße Verfahren wird nachfolgend beschrieben.

Über die Temperatursensoren 9, 8 im Vor- und Rücklauf und über den Volumenstromsensor kann die vom Heizgerät abgegebene Wärmemenge getrennt für den Heizwärmebedarf und unabhängig vom Warmwasserbedarf berechnet werden. Für die Berechnung vom Heizwärmebedarf des Wohngebäudes, wird die Wärmemenge für den Warmwasserbedarf nicht beachtet.

Zunächst wird eine Wärmemenge bestimmt, die einen bestimmten Zeitraum zugeordnet ist. Äquivalent dazu kann auch die Wärmeleistung berücksichtigt werden, die beispielsweise über einen bestimmten Zeitraum gemittelt wird. Die Wärmemengen kann über mehrere Zeitperioden auf saniert werden.

$$Q = \sum_{i=0}^{n} \int \left[ V * \rho * c_w * \left( T_{Vorlauf} - T_{Rücklauf} \right) \right] * dt$$

Die so ermittelte Wärmemenge wird über der Differenz aus der, über den betrachteten Zeitraum (i) gemittelten Raumwärme und der gemittelten Außentemperatur aufgetragen. Das Resultat ist eine, von der Anzahl der aufgenommenen Datenpunkte (n) abhängige Punktschaar, die als Wertepaare gespeichert werden. Diese Wertepaare können zum einen fortlaufend wachsend oder rollierend gespeichert werden. Über die Wertepaare wird eine lineare Regressionsgerade gebildet, welche mit der Häufigkeit an Datenpunkten an Genauigkeit gewinnt. Tatsächlich erfolgt dies durch eine Parameteridentifikation. Wertepaare, die trotz geringer Außentemperatur nur einen geringen Heizwärmebedarf aufzeigen (z.B. aufgrund geschlossener Thermostatventile bei Abwesenheit) können mit Hilfe anderer Wertepaare ausgeglichen werden, sodass die Regression beziehungsweise die identifizierten Parameter nicht verfälscht werden. Die identifizierten Parameter charakterisieren den gebäudespezifischen, temperaturabhängigen Heizwärmebedarf.

Der Zusammenhang zwischen zeitbezogener Wärmemenge bzw. der Wärmeleistung und der Temperaturdifferenz zwischen Raumtemperatur und Außentemperatur wird in dem erfindungsgemäßen Verfahren durch das Steuergerät 6 durch eine Parameteridentifikation der Parameter $a$ und b der Gleichung $y = ax + b$ bestimmt. Optional kann auch ein weiteres Glied das thermische Trägheitsverhalten in der Form $y(t) = T\dot{x}(t) + ax(t) + b$, wobei auch der Parameter T identifiziert wird.

Dadurch kann für jede beliebige Paarung aus Raum- und Außentemperatur der benötigte Heizwärmebedarf (kWh) für einen individuellen Zeitraum berechnet werden. Aus diesen Heizwärmebedarfswerten müssen Summen über das Zeitintervall des angewendeten Referenzwetterdatensatzes (nach EnEV) z.B. Tages- oder Monatswerte gebildet werden. Des Weiteren muss eine Raumtemperatur festgelegt werden, auf die sich der ausgewiesene Heizwärmebedarf bezieht. Über diesen Weg wird das Nutzerverhalten bezüglich der bevorzugten Raumtemperatur eliminiert. Zusätzlich muss die Heizgrenztemperatur der Außentemperatur angegeben werden, bei der das Heizgerät abschaltet.

$$Q = \sum_{i=1}^{n} \left[ Wenn(T_{außen} < Heizgrenztemperatur; a * (T_{innen} - T_{außen}) + b; 0) \right] * i$$

n = Anzahl der Datensätze
i = Tage
$T_{außen}$ = Außentemperatur aus Referenzwetterdatensatz
$T_{innen}$ = festgelegte Raumtemperatur (z.B. 22°C)

Mit der Eingabe der beheizten Fläche in m$^2$ kann der normierte Heizwärmebedarf mit der Einheit kWh/m$^2$ a ausgegeben werden.

Wenn die Regressionskennlinie bzw. die Parameteridentifikation über eine rollierende Messwerteschaar gebildet wird, wird diese fortlaufend aktualisiert, wodurch Sanierungsmaßnahmen der Wärmedämmung sofort ersichtlich sind, ohne dass ein neuer Energieausweis beim Fachhandwerker beauftragt werden muss. Bei einer Messwerteschaar von z.B. 365 Tageswerten, sinkt die Regressionskennlinie bzw. ändern sich die Parameter ab dem Tag der Sanierungsmaßnahme, bis die Kennlinie nach einem Jahr vollkommen aktualisiert ist.

Jeder Energieausweis muss "Empfehlungen zur kostengünstigen Modernisierung" enthalten. Bei einem Verbrauchsausweis werden aber keine Gebäudeparameter betrachtet, wodurch nur eine allgemeine Empfehlung gegeben werden kann. Diese allgemeinen Hinweise wie sie durch den Energieausweisaussteller empfohlen werden, können auch bei dem hier beschriebenen Verfahren automatisch anhand hinterlegter Parameter, wie dem Alter der Heizungsanlage, dem Verbrauchsvergleich mit Referenzgebäuden oder hinterlegten Standardmaßnahmen erstellt werden.

Beispiel: Bei einem Referenzgebäude mit 120 m$^2$ beheizter Fläche wird die täglich erzeugte Wärmemenge mit dem erfindungsgemäßen Verfahren errechnet. Aus diesen berechneten Werten und der Differenz aus gemessenen Tagesmittelwerten der Raum- und Außentemperatur werden Wertepaare gebildet. Wie in Figur 2 dargestellt, wird aus diesen Wertepaaren die Regressionsgerade abgeleitet, was verfahrensgemäß im Steuergerät 6 des Heizgeräts 2 durch eine Parameteridentifikation, beispielsweise nach der Methode der kleinsten Fehlerquadrate erfolgt:

$$y = a\,x + b \; mit \; a = 5{,}1965 \; und \; b = -19{,}381$$

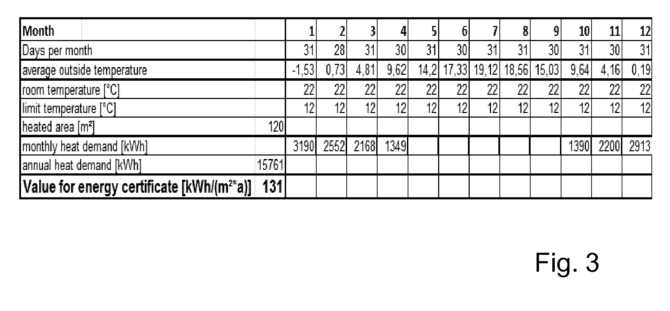

Der Referenzwetterdatensatz lag für dieses Beispiel mit Monatsmittelwerten vor. Die Raumtemperatur wurde auf 22°C und die Heizgrenztemperatur auf 12°C festgelegt. Die Tabelle in Figur 3 stellt die periodisch ermittelten Werte dar. Die Periode betrug in diesem Beispiel einen Monat. Es können auch andere Zeitperioden, insbesondere kürzere Perioden verwendet werden. Die periodisch ermittelten Werte werden aufsummiert:

$$\sum\nolimits_{12}^{1}[wenn(Referenzau\ss entemperatur <$$

$$Heizgrenztemperatur; (5{,}1965 * (Raumtemperatur - Au\ss entemperatur) - 19{,}381) *$$

$$Anzahl\,Tage\,pro\,Monat]; 0)/beheizte\,Fl\ddot{a}che$$

Das Gebäude hat somit bei einer Raumtemperatur von 22°C einen Heizwärmebedarf von 131 kWh/m$^2$a.

Bezugszeichenliste

| | |
|---|---|
| 1 | Wohngebäude |
| 2 | Heizgerät |
| 3 | Heizkreis |
| 4 | Umwälzpumpe |
| 5 | Wärmetauscher |
| 6 | Steuergerät |
| 7 | Volumenstromsensor |
| 8 | Rücklauf-Temperatursensor |
| 9 | Vorlauf-Temperatursensor |
| 10 | Raum-Temperatursensor |
| 11 | Außen-Temperatursensor |
| 12 | Heizkörper |
| 13 | Ventil |
| 14 | Heizkörper |
| 15 | Ventil |

**Patentansprüche**

1. Verfahren zur Bestimmung des durch ein Heizgerät (2) gedeckten für ein Wohngebäude (1) typischen Heizwärmebedarfs, wobei das Heizgerät (2) die Wärme mittels eines erwärmten Wärmeträgermediums über einen Heizkreis (3) an das Wohngebäude abgibt,
wobei das Heizgerät (2) Vorlauf- und Rücklauf-Temperatursensoren (8, 9) zum Messen der Temperaturdifferenz des Wärmeträgermediums zwischen Vorlauf und Rücklauf des Heizkreises (3) sowie einen Volumenstromsensor (7) zur Messen des Volumenstroms oder Massenstroms des Wärmeträgermediums umfasst, **gekennzeichnet durch** die Schritte

- Messen der Temperaturdifferenz des Wärmeträgermediums zwischen Vorlauf und Rücklauf des Heizkreises (3), Messen des Volumen- oder Massenstroms des Wärmeträgermediums und Berechnen der Wärmeleistung aus den gemessenen Daten,
- Messen der Differenz zwischen Raumtemperatur und Außentemperatur,
- Bestimmen der gemittelten Parameter eines Polynoms vorzugsweise eines Polynoms ersten Grades, das die Abhängigkeit der Wärmeleistung von der Differenz zwischen Raumtemperatur und Außentemperatur beschreibt,
- Berechnung eines für das Wohngebäude typischen Heizwärmebedarfs anhand der Parameter des Polynoms und anhand eines Zeit-Profils von Differenzen zwischen Raumtemperatur und Außentemperatur über einen bestimmten Zeitraum.

2. Verfahren nach Anspruch 1, **dadurch gekennzeichnet, dass** der Zeitraum ein Jahr ist und dass der Heizwärmebedarfs auf die Quadratmeterzahl des Wohngebäudes bezogen wird.

3. Verfahren nach Anspruch 1 oder 2, **dadurch gekennzeichnet, dass** das Polynom zusätzlich ein die thermische Trägheit des Wohngebäudes (1) repräsentierenden Bestandteil enthält, dessen gemittelte Zeitkonstante bestimmt wird

## Claims

1. Method for determining a typical heating demand for a residential building (1), which is met by a heating device (2), wherein the heating device (2) supplies the heat to the residential building by means of a heated heat transfer medium via a heating circuit (3), wherein the heating device (2) comprises flow temperature sensors and return flow temperature sensors (8, 9) for measuring a temperature difference of the heat transfer medium between the flow and return flow of the heating circuit (3), and a volume flow sensor (7) for measuring a volume flow or mass flow of the heat transfer medium, **characterized by** the steps of

- measuring the temperature difference of the heat transfer medium between flow and return flow of the heating circuit (3), measuring the volume flow or mass flow of the heat transfer medium and calculating the heat output from the measured data,
- measuring the difference between indoor temperature and outdoor temperature,
- determining an averaged parameter of a polynomial, preferably of a first degree polynomial, which describes the dependence of the heat output on the difference between indoor temperature and outdoor temperature,
- calculating a typical heating demand for the residential building based on the parameter of the polynomial and based on a time profile of differences between indoor temperature and outdoor temperature over a specified period of time.

2. Method according to claim 1, **characterized in that** the period of time is one year and the heating demand is related to the number of square meters of the residential building.

3. Method according to claim 1 or 2, **characterized in that** the polynomial further comprises a component representing the thermal inertia of the residential building (1), whose average time constant is being determined.

## Revendications

1. Procédé servant à déterminer les besoins thermiques pour le chauffage propres à un immeuble d'habitation (1) couverts par un appareil de chauffage (2), dans lequel l'appareil de chauffage (2) fournit la chaleur à l'immeuble d'habitation par l'intermédiaire d'un circuit de chauffage (3) au moyen d'un agent caloporteur chauffé, dans lequel l'appareil de chauffage (2) comprend des capteurs de température de conduit arrivée et de conduit de retour (8, 9) servant à mesurer la différence de température de l'agent caloporteur entre le conduit d'arrivée et le conduit de retour du circuit de chauffage (3) ainsi qu'un capteur de débit volumique (7) servant à mesurer le débit volumique ou le débit massique de l'agent caloporteur, **caractérisé par** les étapes suivantes consistant à

- mesurer la différence de température de l'agent caloporteur entre le conduit d'arrivée et le conduit de retour du circuit de chauffage (3), mesurer le débit volumique ou le débit massique de l'agent caloporteur et calculer la puissance thermique à partir des données mesurées,

- mesurer la différence entre la température ambiante et la température extérieure,
- définir les paramètres pondérés d'un polynôme, de préférence d'un polynôme de premier degré, qui décrit la dépendance entre la puissance thermique et la différence entre la température ambiante et la température extérieure,
- calculer les besoins thermiques pour le chauffage propres à l'immeuble d'habitation à l'aide des paramètres du polynôme et à l'aide d'un profil de temps de différences entre la température ambiante et la température extérieure sur une durée définie.

2. Procédé selon la revendication 1, **caractérisé en ce que** la durée est d'un an et que les besoins thermiques pour le chauffage se rapportent au nombre de mètres carrés de l'immeuble d'habitation.

3. Procédé selon la revendication 1 ou 2, **caractérisé en ce que** le polynôme contient en supplément une composante représentant l'inertie thermique de l'immeuble d'habitation (1), dont la constante de temps pondérée est définie.

Fig. 1

Wärmebedarf eines Wohngebäudes im Bestand

Fig. 2

| Month | | 1 | 2 | 3 | 4 | 5 | 6 | 7 | 8 | 9 | 10 | 11 | 12 |
|---|---|---|---|---|---|---|---|---|---|---|---|---|---|
| Days per month | | 31 | 28 | 31 | 30 | 31 | 30 | 31 | 31 | 30 | 31 | 30 | 31 |
| average outside temperature | | -1,53 | 0,73 | 4,81 | 9,62 | 14,2 | 17,33 | 19,12 | 18,56 | 15,03 | 9,64 | 4,16 | 0,19 |
| room temperature [°C] | | 22 | 22 | 22 | 22 | 22 | 22 | 22 | 22 | 22 | 22 | 22 | 22 |
| limit temperature [°C] | | 12 | 12 | 12 | 12 | 12 | 12 | 12 | 12 | 12 | 12 | 12 | 12 |
| heated area [m²] | 120 | | | | | | | | | | | | |
| monthly heat demand [kWh] | | 3190 | 2552 | 2168 | 1349 | | | | | | 1390 | 2200 | 2913 |
| annual heat demand [kWh] | 15761 | | | | | | | | | | | | |
| Value for energy certificate [kWh/(m²*a)] | 131 | | | | | | | | | | | | |

Fig. 3

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1215445 A2